# EUROPÄISCHE PATENTANMELDUNG

(11) **EP 2 028 459 A1**
(43) Veröffentlichungstag der Anmeldung: **25.02.2009**
(21) Anmeldenummer: 07016342.3
(22) Anmeldetag: 21.08.2007
(51) Int. Cl.: G01G 19/08

(54) **Vorrichtung und ein Verfahren zur Bestimmung des Lastzustandes eines Box- oder Tank-Containers**

(71) Anmelder: Container Master Projekt GmbH, 27412 Westertimke (DE); Siebert, Doris, 27412 Vorwerk (DE)
(72) Erfinder: Siebert, Doris, 27412 Vorwerk (DE)
(74) Vertreter: Scheffler, Jörg

(57) **Zusammenfassung**

Die Erfindung betrifft eine Vorrichtung und ein Verfahren zur Bestimmung des Lastzustandes eines Tank-Containers (1). Um den Lastzustand, insbesondere also das Füllgewicht des Tank-Containers (1) mit geringem Aufwand bestimmen zu können, während der Tank-Container (1) an dem Containerchassis (2) des Zugfahrzeuges (6) aufliegt, ist zumindest ein Sensor (4) an einer Kupplung (5) zwischen dem Zugfahrzeug (6) und dem Containerchassis (2) und ein Sensor (7) an einem lediglich gestrichelt dargestellten Stützbein (8) angeordnet. Außerdem ist an jeder Radachse des Containerchassis (2) an einer Unterseite und einer Oberseite ein weiterer Sensor angeordnet, wobei die Sensoren (4, 7) jeweils als Dehnungsmessstreifen ausgeführt sind.

## Beschreibung

Die Erfindung betrifft eine Vorrichtung und ein Verfahren zur Bestimmung des Lastzustandes, insbesondere des Füllgewichtes, eines Box- oder Tank-Containers mittels eines zur Erfassung von Formänderungen bestimmten Sensors, während der Box- oder Tank-Container an einem Rahmen eines Zugfahrzeuges oder eines Anhängers, insbesondere Containerchassis fixiert ist.

In der Praxis ist es wünschenswert, den Inhalt von Box- und Tank-Containern jeweils aktuell zu erfassen, um so beispielsweise Entnahmemengen genau bestimmen zu können.

Dabei werden unter der Bezeichnung Containerchassis Fahrgestelle für ISO-Container, Auflagen und Behälter verstanden, welche von unten mit einem auch als Twistlock bezeichneten Verriegelungsbolzen gesichert werden. Die Abstände der Containerverriegelungen ergeben sich größtenteils durch die ISO-Normen von Seecontainem. Um ein Containerchassis zu bewegen, wird eine Sattelzugmaschine benötigt, wobei ein Königszapfen das Chassis über die Sattelplatte mit der Zugmaschine verbindet.

Zur Bestimmung des Lastzustandes ist durch die DE 10 2005 032 612 A1 ein Wiegesystem für Box- und Tank-Container bekannt, bei dem das Containergewicht aufgrund der Messung einer unter Last auftretenden Biegung von Rahmenteilen des Container-LKWs oder Containerchassis bei Belastung durch den Box- oder Tank-Container bestimmt wird. Dabei lastet der Container auf den vier Eckbeschlägen des Rahmens, sodass diese Belastung zu einer Durchbiegung des LKW-Rahmens führt. Durch Addition der Messwerte kann das Gesamtgewicht ermittelt werden. Hierzu erfolgt die Messwertverarbeitung in einem Mikroprozessor. Hier werden auch die Temperaturkompensation, die Nullung und eine Kalibrierung ausgeführt. Ferner können die Daten in einen Computer gespeist und weiter ausgewertet werden. Zur Messung werden an vier bis insgesamt zehn Stellen des Rahmens Dehnungsmessstreifen (DMS) angebracht. Mittels der Dehnungsmessstreifen wird die Längenänderung bei der Durchbiegung gemessen, womit ein Maß für das Containergewicht am jeweiligen Auflagepunkt vorliegt.

Derartige Dehnungsmessstreifen werden in der Praxis bereits vielfach eingesetzt, um Formänderungen, insbesondere Dehnungen und Stauchungen, an der Oberfläche von Bauteilen zu erfassen. Sie ermöglichen die Bestimmung von mechanischen Spannungen und damit der Beanspruchung des Werkstoffs. Beispielsweise werden Dehnungsmessstreifen in Sensoren eingesetzt, mit denen dann die Belastung von Kraftaufnehmern, Momentaufnehmem oder Druckaufnehmern gemessen werden. Dabei können statische Belastungen und sich zeitlich ändernde Belastungen erfasst werden.

Als nachteilig hat es sich jedoch in der Praxis erwiesen, dass das Füllgewicht des Box- oder Tank-Containers aufgrund von Fehlereinflüssen mit lediglich unzureichender Genauigkeit bestimmt werden kann. Insbesondere erfordern solche Verfahren im Allgemeinen eine horizontale Ausrichtung des Chassis, was jedoch in der Praxis nur mit großem Aufwand realisierbar ist.

Es ist ferner durch die DE 198 20 139 A1 ein Verfahren zur Überwachung des ordnungsgemäßen Verriegelns und Sicherns einer mit einem Verschlussmechanismus und einem Sicherungsmechanismus versehenen Sattelkupplung eines Sattelfahrzeugs bekannt, wobei ein erster Sensor zur Überwachung des Zustands des Verschlussmechanismus und ein zweiter Sensor zur direkten oder indirekten Überwachung des Zustands des Sicherungsmechanismus vorgesehen sind. Durch dieses Verfahren soll das ordnungsgemäße Verriegeln und Sichern der Sattelkupplung sichergestellt werden.

Der Erfindung liegt die Aufgabe zugrunde, eine Vorrichtung und ein Verfahren zur Erfassung des Lastzustandes eines Box- oder Tank-Containers zu schaffen, die mit geringem Aufwand eine vergleichsweise genaue Bestimmung des Füllgewichtes ermöglichen.

Diese Aufgabe wird erfindungsgemäß mit einer Vorrichtung gemäß den Merkmalen des Anspruchs 1 gelöst. Die weitere Ausgestaltung der Vorrichtung ist den Unteransprüchen 2 bis 13 zu entnehmen.

Erfindungsgemäß ist also eine Vorrichtung vorgesehen, bei welcher zumindest ein erster Sensor an einer Kupplung zwischen dem Zugfahrzeug und dem Anhänger oder einem Stützbein sowie zumindest ein weiterer Sensor an einer Radachse des Anhängers angeordnet sind. Hierdurch wird in überraschend einfacher Weise eine wesentlich verbesserte Genauigkeit bei der Bestimmung des Lastzustandes erreicht, indem der Messwert mittels des Sensors einerseits unmittelbar an der Radachse, andererseits an einer Kupplung, sofern die Zugmaschine angekuppelt ist, oder an einem oder mehreren Stützbeinen, wenn der Anhänger unabhängig von dem Zugfahrzeug abgestellt ist, erfasst wird. Entgegen dem Vorurteil in der Fachwelt, dass nämlich eine hinreichend genaue Messung des Tankinhaltes des an dem Chassis fixierten Containers nicht möglich ist, hat sich gezeigt, dass die Messwerterfassung an der Radachse von äußeren Einflüssen, beispielsweise der Abweichung des Chassis von einer horizontalen Orientierung, nahezu unabhängig ist. Erfindungsgemäß kann erstmals eine genaue Bestimmung des Tank-Containerinhaltes unmittelbar aus der Änderung des Lastzustandes abgeleitet werden, wodurch sich in der Praxis vielfältige Einsatzmöglichkeiten und auch Erleichterungen der Arbeitsabläufe ergeben.

Dabei erweist es sich als besonders vorteilhaft, wenn der erste Sensor an einem Königszapfen, einer Sattelplatte und/oder an einem Chassishals angeordnet ist. Hierdurch kann die Messung unmittelbar an der Verbindungsstelle des Aufliegers mit der Zugmaschine vorgenommen werden.

Man könnte daran denken, den weiteren Sensor an lediglich einer einzigen Radachse anzubringen. Besonders zuverlässig ist hingegen eine Weiterbildung der Erfindung, bei welcher jeweils zumindest ein weiterer Sensor, insbesondere zwei Sensoren an jeder Radachse des Anhängers, angeordnet ist. Hierdurch kann die Genauigkeit bei der Bestimmung des Lastzustands wesentlich verbessert werden, indem die Signale der den einzelnen Radachsen zugeordneten Sensoren abgeglichen und beispielsweise ein entsprechender Mittelwert gebildet wird.

Grundsätzlich ist lediglich ein einziger Sensor an der jeweiligen Radachse zur Signalerfassung ausreichend. Besonders zweckmäßig ist es hingegen, wenn der jeweilige, der Radachse zugeordnete Sensor an einer Unterseite und einer Oberseite der Radachse angeordnet ist, um so einerseits eine Dehnung, andererseits eine Stauchung mittels des Sensors zu messen, die einen zuverlässigen Rückschluss auf die jeweilige Biegung der Radachse gestattet. Die Bestimmung des Lastzustandes wird dadurch weiter verbessert.

Der Sensor kann grundsätzlich die eintretende Formänderung in beliebiger Weise erfassen. Eine besonders zuverlässige Erfassung der lastabhängigen Verformung an der Radachse und dem Chassishals wird dadurch erreicht, dass jeder Sensor zumindest einen Dehnungsmessstreifen (DMS) aufweist, um so auf ein an sich bekanntes Messprinzip zurückgreifen zu können.

Hierzu weist die Vorrichtung eine Steuereinheit auf, um so die einzelnen Signale der Sensoren auf der Basis vorbestimmter Parameter, insbesondere auch auf der Basis von Erfahrungswerten entsprechend der hinterlegten Rechenvorschrift in ein Maß für den Lastzustand umzurechnen.

Dabei ist es besonders praxisnah, wenn die Steuereinheit eine Schnittstelle zur drahtlosen Datenübertragung insbesondere der erfassten Messwerte des Sensors aufweist, sodass die Übertragung der Signale problemlos und mit geringem Aufwand möglich ist. Insbesondere wird so ein Eingriff in das jeweilige Chassis auf ein Minimum beschränkt, sodass auch eine Nachrüstung uneingeschränkt möglich ist.

Über eine entsprechende Schnittstelle kann zudem der so bestimmte Wert des Lastzustandes gespeichert und gemäß einer weiteren praxisgerechten Ausgestaltung, bei der die Vorrichtung mit einem Protokoll-Drucker ausgestattet ist, mittels eines gedruckten Beleges nachgewiesen werden. Fehlerquellen werden so vermieden.

Zusätzlich kann die Vorrichtung mit einem GPS-Empfänger ausgestattet sein, um so auch die jeweilige Position in Bezug auf eine Änderung des Tankinhaltes zu erfassen, wodurch beispielsweise die Nachweisbarkeit bei der Entsorgung gefährlicher Flüssigkeiten weiter vereinfacht wird.

Hierzu ist gemäß einer besonders sinnvollen Ausgestaltung die erfindungsgemäße Vorrichtung mit einem Sender zur drahtlosen Übertragung von Funksignalen an eine Zentrale ausgestattet, sodass nicht nur der Transportweg, sondern auch die jeweiligen Entnahmen zentral erfasst, gesteuert und überwacht werden können, um so einen unerwünschten Missbrauch ausschließen zu können.

Der Sensor kann beispielsweise zum Schutz gegen Manipulationen an der jeweiligen Aufnahme verschweißt oder in der Aufnahme vergossen sein. Eine andere, ebenfalls besonders Erfolg versprechende Ausgestaltung wird dadurch erreicht, dass der Sensor mittels eines Spezialklebers fixiert ist.

Bei der Montage der Sensoren, insbesondere durch Anbringen mittels der Adhäsionsverbindung, ergeben sich unterschiedliche Skalenfaktoren und Nullpunkte jeder Messstelle. Diese sind durch eine Kalibrierphase nach der Montage individuell zu bestimmen. Die ermittelten Daten werden anschließend in einem Speicherchip an jeder Messstelle abgelegt und bleiben so für eine Zentraleinheit abrufbar. Dadurch wird auch bei einem Wechsel des Zugfahrzeuges gewährleistet, dass die Zentraleinheit stets die tatsächlichen, individuellen Kalibrierdaten bei der Auswertung berücksichtigt Die so gesammelten Signale werden mittels einer Anzeige als Masse angezeigt. Mittels weiterer Sensoren können zudem Parameter wie beispielsweise die Lage und Orientierung mittels eines GPS-Empfängers, die Temperatur oder der Druck im Behälter erfasst werden.

Weiterhin wird die Aufgabe erfindungsgemäß mit einem Verfahren zur Bestimmung des Lastzustandes, insbesondere des Füllgewichtes, eines Box- oder Tank-Containers gelöst, bei dem mittels eines Sensors aufgrund von Formänderungen Signale erfasst werden, während der Box- oder Tank-Container an einem Rahmen eines Zugfahrzeuges und/oder eines Anhängers, insbesondere Containerchassis fixiert ist und mittels einer Steuereinheit der Lastzustand bestimmt wird, indem zumindest ein erstes Signal im Bereich einer Kupplung zwischen dem Zugfahrzeug und dem Anhänger und/oder einem Stützbein sowie zumindest ein weiteres Signal an einer Radachse des Anhängers erfasst wird, sodass mit einem überraschend geringen Aufwand die Genauigkeit der Messung des Lastzustandes wesentlich verbessert wird. Insbesondere wird dabei der Einfluss einer möglichen Neigung des Chassis gegenüber der Horizontalen wesentlich vermindert.

Hierzu wird bevorzugt jeweils ein Signal jeder Radachse erfasst, um so in Abhängigkeit von vorbestimmten Parametern oder Korrekturwerten einen Gesamtlastzustand zu bestimmen.

Eine andere, ebenfalls besonders Erfolg versprechende Abwandlung wird dadurch erreicht, dass die Signalübertragung mittels eines Datenbussystems erfolgt, um so die Störanfälligkeit des Systems wesentlich zu reduzieren. Die Messwerte werden dabei in digitaler Form übermittelt.

Zugleich wird dadurch eine vorteilhafte Ausgestaltung des erfindungsgemäßen Verfahrens ermöglicht, bei dem die Signale drahtlos übertragen werden, wobei auf an sich bekannte Technologien zur Funkübertragung zurückgegriffen werden kann.

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine Seitenansicht eines Zugfahrzeuges mit einem Containerchassis;
- Fig. 2: eine vergrößerte Darstellung einer Radaufhängung des in der Figur 1 gezeigten Containerchassis;

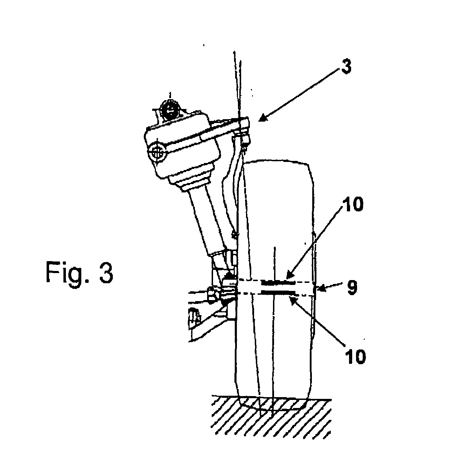

- Fig. 3: eine vergrößerte Darstellung einer Einzelradaufhängung des in der Figur 1 gezeigten Containerchassis.

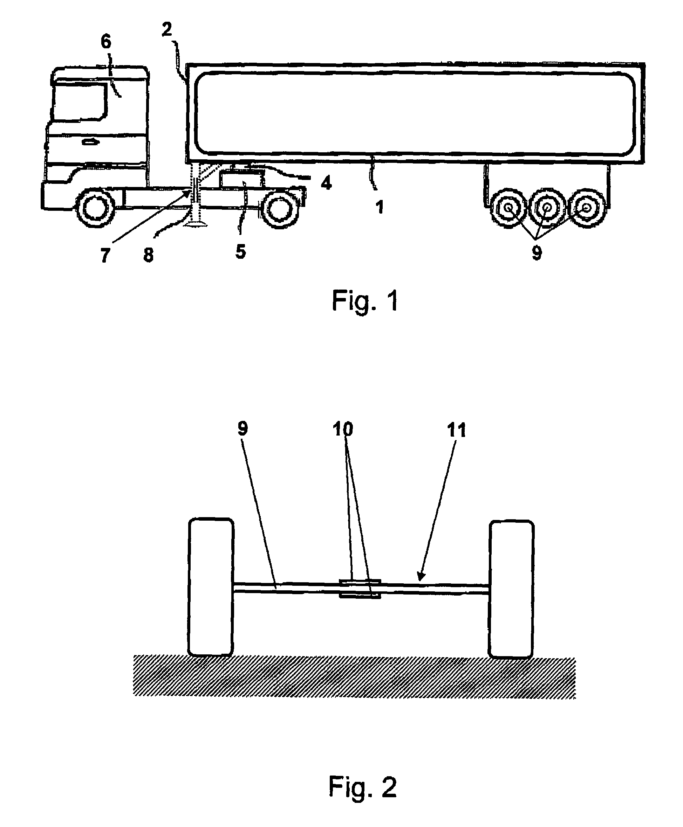

Die erfindungsgemäße Vorrichtung sowie das erfindungsgemäße Verfahren zur Bestimmung des Lastzustandes eines Tank-Containers 1 wird nachstehend anhand der Figuren 1 und 2 näher beschrieben, die einerseits ein Zugfahrzeug 6 mit einem den Tank-Container 1 aufnehmenden Containerchassis 2, andererseits eine vergrößerte Darstellung einer als Starrachse ausgeführten Radaufhängung 11 sowie einer Einzelradaufhängung 3 des Containerchassis 2 zeigen. Um den Lastzustand des Tank-Containers 1, insbesondere also das Füllgewicht mit geringem Aufwand bestimmen zu können, während der Tank-Container 1 an dem Containerchassis 2 des Zugfahrzeuges 6 aufliegt, ist zumindest ein Sensor 4 an einer Kupplung 5 zwischen dem Zugfahrzeug 6 und dem Containerchassis 2 und ein Sensor 7 an einem lediglich gestrichelt dargestellten Stützbein 8 angeordnet. Außerdem ist an jeder Radachse 9 des Containerchassis 2 an einer Unterseite und einer Oberseite jeweils ein weiterer Sensor 10 angeordnet, wobei die Sensoren 4, 7, 10 jeweils als Dehnungsmessstreifen ausgeführt sind.

## Patentansprüche

1. Vorrichtung zur Bestimmung des Lastzustandes, insbesondere des Füllgewichtes, eines Box- oder Tank-Containers (1) mittels eines Sensors (4, 7, 10), während der Box- oder Tank-Container (1) an einem Rahmen eines Zugfahrzeuges (6) und/oder eines Anhängers, insbesondere Containerchassis (2) fixiert ist, **dadurch gekennzeichnet, dass** zumindest ein erster Sensor (4, 7) an einer Kupplung (5) zwischen dem Zugfahrzeug (6) und dem Anhänger und/oder an einem Stützbein (8) des Anhängers sowie zumindest ein weiterer Sensor (10) an einer Radachse (9) des Anhängers angeordnet ist.

2. Vorrichtung nach Anspruch 1, **dadurch gekennzeichnet, dass** der erste Sensor (4) an einem Königszapfen, einer Sattelplatte und/oder an einem Chassishals angeordnet ist.

3. Vorrichtung nach den Ansprüchen 1 oder 2, **dadurch gekennzeichnet, dass** jeweils zumindest ein Sensor (10), insbesondere genau zwei Sensoren (10), an jeder Radachse (9) des Anhängers angeordnet ist.

4. Vorrichtung nach zumindest einem der vorhergehenden Ansprüche, **dadurch gekennzeichnet, dass** der jeweilige, der Radachse (9) zugeordnete Sensor (10) an einer Unterseite und an einer Oberseite der Radachse (9) angeordnet ist

5. Vorrichtung nach zumindest einem der vorhergehenden Ansprüche, **dadurch gekennzeichnet, dass** jeder Sensor (10) zumindest einen Dehnungsmessstreifen (DMS) aufweist.

6. Vorrichtung nach zumindest einem der vorhergehenden Ansprüche, **dadurch gekennzeichnet, dass** die Vorrichtung eine Steuereinheit aufweist.

7. Vorrichtung nach zumindest einem der vorhergehenden Ansprüche, **dadurch gekennzeichnet, dass** die Steuereinheit eine Schnittstelle zur drahtlosen Datenübertragung insbesondere der erfassten Messwerte der Sensoren (4, 7, 10) aufweist.

8. Vorrichtung nach zumindest einem der vorhergehenden Ansprüche, **dadurch gekennzeichnet, dass** die Vorrichtung mit einem Protokoll-Drucker ausgestattet ist.

9. Vorrichtung nach zumindest einem der vorhergehenden Ansprüche, **dadurch gekennzeichnet, dass** die Vorrichtung mit einem GPS-Empfänger ausgestattet ist.

10. Vorrichtung nach zumindest einem der vorhergehenden Ansprüche, **dadurch gekennzeichnet, dass** die Vorrichtung mit einem Sender zur drahtlosen Übertragung von Funksignalen an eine Zentrale ausgestattet ist.

11. Vorrichtung nach zumindest einem der vorhergehenden Ansprüche, **dadurch gekennzeichnet, dass** der Sensor mittels einer Adhäsionsverbindung fixiert ist.

12. Vorrichtung nach zumindest einem der vorhergehenden Ansprüche, **dadurch gekennzeichnet, dass** die Vorrichtung mit einer Anzeige ausgestattet ist.

13. Vorrichtung nach zumindest einem der vorhergehenden Ansprüche, **dadurch gekennzeichnet, dass** die Vorrichtung mit weiteren Sensoren zur Erfassung der Umgebungsparameter ausgestattet ist.

14. Vorrichtung nach zumindest einem der vorhergehenden Ansprüche, **dadurch gekennzeichnet, dass** die Vorrichtung eine von dem Zugfahrzeug (6) unabhängige, insbesondere an dem Containerchassis (2) fixierte elektrische Energieversorgung aufweist.

15. Verfahren zur Bestimmung des Lastzustandes, insbesondere des Füllgewichtes, eines Box- oder Tank-Containers (1), bei dem mittels eines Sensors (4, 7, 10) aufgrund von Formänderungen Signale erfasst werden, während der Box- oder Tank-Container (1) an einem Rahmen eines Zugfahrzeuges (6) und/oder eines Anhängers, insbesondere Containerchassis (2) fixiert ist und mittels einer Steuereinheit der Lastzustand bestimmt wird, **dadurch gekennzeichnet, dass** zumindest ein erstes Signal im Bereich einer Kupplung (5) zwischen dem Zugfahrzeug (6) und dem Anhänger und/oder an einem Stützbein (8) des Anhängers sowie zumindest ein weiteres Signal an einer Radachse (9) des Anhängers erfasst wird.

16. Verfahren nach Anspruch 15, **dadurch gekennzeichnet, dass** jeweils ein Signal jeder Radachse (9) erfasst wird.

17. Verfahren nach Anspruch 15 oder 16, **dadurch gekennzeichnet, dass** die Signalübertragung mittels eines Datenbussystems erfolgt.

18. Verfahren nach zumindest einem der Ansprüche 15 bis 17, **dadurch gekennzeichnet, dass** die Signale drahtlos übertragen werden.
